# EUROPÄISCHE PATENTSCHRIFT

(11) **EP 3 714 205 B1**
(45) Veröffentlichungstag und Bekanntmachung des Hinweises auf die Patenterteilung: **04.01.2023**
(21) Anmeldenummer: 18807898.4
(22) Anmeldetag: 13.11.2018
(51) Int. Cl.: F21S 41/43, F21S 41/663, F21S 41/64, F21S 41/143

(54) **LICHTMODUL FÜR EINEN KRAFTFAHRZEUGSCHEINWERFER**
LIGHT MODULE FOR A MOTOR VEHICLE HEADLAMP
MODULE D'ÉCLAIRAGE POUR PHARE DE VÉHICULE AUTOMOBILE

(30) Priorität: 21.11.2017 EP 17202776
(43) Veröffentlichungstag der Anmeldung: 30.09.2020
(73) Patentinhaber: ZKW Group GmbH, 3250 Wieselburg (AT)
(72) Erfinder: MIEDLER, Stefan, 3105 Unterradlberg (AT); SCHADENHOFER, Peter, 3382 Roggendorf (AT); REINPRECHT, Markus, 3384 Pielachhäuser (AT)
(74) Vertreter: Patentanwaltskanzlei Matschnig & Forsthuber OG
(86) Internationale Anmeldenummer: PCT/EP2018/081023
(87) Internationale Veröffentlichungsnummer: WO 2019/101571

(56) Entgegenhaltungen:
- WO-A1-2013/167705
- WO-A1-2014/164792
- WO-A1-2017/066817
- WO-A1-2017/157623
- WO-A1-2017/157624
- DE-A1-102012 206 472
- DE-B3-102016 112 617
- DE-U1-202016 102 988

## Beschreibung

Die Erfindung betrifft ein Lichtmodul für einen Kraftfahrzeugscheinwerfer, welches Lichtmodul zumindest eine Lichtquelle sowie zumindest ein optisches Abbildungssystem umfasst, welches optische Abbildungssystem von der zumindest einen Lichtquelle erzeugtes Licht in einen Bereich vor dem Lichtmodul in Form von zumindest einer Lichtverteilung eines vorgegebenen Typs abbildet, wobei das optisches Abbildungssystem eine Eintrittsoptik, eine Austrittsoptik, und zumindest eine Strahlformungsvorrichtung aufweist, welche Strahlformungsvorrichtung zwischen der Eintrittsoptik und der Austrittsoptik angeordnet ist, wobei die Eintrittsoptik dazu eingerichtet ist, das von der zumindest einen Lichtquelle erzeugte Licht aufzufangen, und in Form mehrerer Lichtbündel in Richtung der Strahlformungsvorrichtung zu leiten, die Strahlformungsvorrichtung dazu eingerichtet ist, die mehreren Lichtbündel zu zumindest einem Zwischenbild eines vorgegebenen Typs zu formen, und die Austrittsoptik dazu eingerichtet ist, das zumindest eine Zwischenbild eines vorgegebenen Typs in Form der zumindest einen Lichtverteilung eines vorgegebenen Typs in den einen Bereich vor dem Lichtmodul, vorzugsweise auf die Fahrbahn, zu projizieren.

Außerdem betrifft die Erfindung einen Kraftfahrzeugscheinwerfer mit zumindest einem solchen Lichtmodul.

Lichtmodule der oben genannten Art sind aus dem Stand der Technik bekannt. Die internationale Anmeldung der Anmelderin WO 2015/058227 A1 zeigt ein Mikroprojektions-Lichtmodul für einen Kraftfahrzeugscheinwerfer, umfassend zumindest eine Lichtquelle sowie zumindest eine Projektionseinrichtung, welche das von der zumindest einen Lichtquelle austretende Licht in einen Bereich vor dem Kraftfahrzeug in Form von zumindest einer Lichtverteilung abbildet, wobei die Projektionseinrichtung umfasst: eine Eintrittsoptik, welche aus einem Array an Mikro-Eintrittsoptiken besteht; eine Austrittsoptik, welche aus einem Array an Mikro-Austrittsoptiken besteht, wobei jeder Mikro-Eintrittsoptik genau eine Mikro-Austrittsoptik zugeordnet ist, wobei die Mikro-Eintrittsoptiken derart ausgebildet und/oder die Mikro-Eintrittsoptiken und die Mikro-Austrittsoptiken derart zueinander angeordnet sind, dass das aus einer Mikro-Eintrittsoptik austretende Licht genau nur in die zugeordnete Mikro-Austrittsoptik eintritt, und wobei das von den Mikro-Eintrittsoptiken vorgeformte Licht von den Mikro- Austrittsoptiken in einen Bereich vor dem Kraftfahrzeug als zumindest eine Lichtverteilung abgebildet wird.

In der internationalen Anmeldung WO 2017/066817 A1 der Anmelderin wird ein Mikroprojektions-Lichtmodul für einen Fahrzeugscheinwerfer thematisiert, welches zumindest eine Lichtquelle sowie zumindest eine Projektionseinrichtung umfasst, welche das von der zumindest einen Lichtquelle austretende Licht in einen Bereich vor dem Kraftfahrzeug in Form von zumindest einer Lichtverteilung abbildet, wobei die Projektionseinrichtung eine Eintrittsoptik, welche eine, zwei oder mehr Mikro-Eintrittsoptiken aufweist, welche vorzugsweise in einem Array angeordnet sind, und eine Austrittsoptik, welche eine, zwei oder mehr Mikro-Austrittsoptiken aufweist, welche vorzugsweise in einem Array angeordnet sind, wobei jeder Mikro-Eintrittsoptik genau eine Mikro-Austrittsoptik zugeordnet ist, wobei die Mikro-Eintrittsoptiken derart ausgebildet und/ oder die Mikro-Eintrittsoptiken und die Mikro-Austrittsoptiken derart zueinander angeordnet sind, dass im Wesentlichen das gesamte aus einer Mikro-Eintrittsoptik austretende Licht genau nur in die zugeordnete Mikro-Austrittsoptik eintritt, und wobei das von den Mikro-Eintrittsoptiken vorgeformte Licht von den Mikro-Austrittsoptiken in einen Bereich vor dem Kraftfahrzeug als zumindest eine Lichtverteilung abgebildet wird.

Weiters zeigt die internationale Anmeldung WO 2017/066818 A1 der Anmelderin ein Mikroprojektions-Lichtmodul für einen Kraftfahrzeugscheinwerfer, umfassend zumindest eine Lichtquelle sowie zumindest eine Projektionseinrichtung, welche das von der zumindest einen Lichtquelle austretende Licht in einen Bereich vor dem Kraftfahrzeug in Form von zumindest einer Lichtverteilung abbildet, wobei die Projektionseinrichtung umfasst eine Eintrittsoptik, welche eine, zwei oder mehr Mikro-Eintrittsoptiken aufweist, welche vorzugsweise in einem Array angeordnet sind, eine Austrittsoptik, welche eine, zwei oder mehr Mikro-Austrittsoptiken aufweist, welche vorzugsweise in einem Array angeordnet sind, wobei jeder Mikro-Eintrittsoptik genau eine Mikro-Austrittsoptik zugeordnet ist, wobei die Mikro-Eintrittsoptiken derart ausgebildet und/oder die Mikro-Eintrittsoptiken und die Mikro-Austrittsoptiken derart zueinander angeordnet sind, dass im Wesentlichen das gesamte aus einer Mikro-Eintrittsoptik austretende Licht genau nur in die zugeordnete Mikro-Austrittsoptik eintritt, und wobei das von den Mikro-Eintrittsoptiken vorgeformte Licht von den Mikro-Austrittsoptiken in einen Bereich vor dem Kraftfahrzeug als zumindest eine Lichtverteilung abgebildet wird, wobei zwischen der Eintrittsoptik und der Austrittsoptik eine erste Blendenvorrichtung angeordnet ist.

Weiters ist es hinlänglich bekannt, dass jeder Mikro-Eintrittsoptik nicht genau eine Mikro-Austrittsoptik zugeordnet muss. Im Gegenteil, jede Mikro-Eintrittsoptik und oder Mikro-Austrittsoptik kann in mehrere "Mikro-Mikro-Optiken" unterteilt werden (siehe WO 2015/058227 A1 Seite 19, Absatz 4, WO 2017/066817 A1 Seite 21, Absatz 3, WO 2017/066818 A1, Seite 19, letzter Absatz). Weitere Lichtmodule sind aus den WO 2017/157624 A1, DE 10 2016 112617 B3 oder WO 2014/164792 A1 bekannt.

Ein Nachteil der oben genannten Lichtmodule ist, dass mit einem einzigen Lichtmodul nur eine sehr begrenzte Anzahl an Lichtverteilungen beziehungsweise Lichtfunktionen realisiert werden kann (niedrige Effizienz). Zum Beispiel wird zum Realisieren dynamischer (veränderbarer) Hauptlichtfunktionen mit Blenden (Beleuchtungsvorrichtungen) gearbeitet, die hinsichtlich der Optiken (Eintrittsoptik und/oder Austrittsoptik) mechanisch bewegbar sind. Dies kann beispielsweise mit einem Aktuator verwirklich werden, der der/den Blende(n) und/oder der/den Optik(en) zugeordnet ist. Nachdem aber die lichttechnisch relevanten Beleuchtungsvorrichtungen derart hergestellt werden, dass die Blenden mit Hilfe von Beschichtungsverfahren auf dazu vorgesehene Träger (Glasplatten) aufgebracht werden, ist eine dynamische Veränderung des Lichtbildes nur sehr begrenzt möglich.

Es ist eine Aufgabe der vorliegenden Erfindung ein Lichtmodul zur Erzeugung einer dynamischen Lichtverteilung mit einer verbesserten Effizienz zu schaffen. Die Aufgabe wird mit einem Lichtmodul der oben genannten Art dadurch gelöst, dass die Strahlformungsvorrichtung als eine durchgehende, sich in einer quer zur optischen Achse des optischen Abbildungssystems stehenden Ebene erstreckende Schicht ausgebildet ist, welche durchgehende Schicht hinsichtlich ihrer Transparenz steuerbar ist und die gesamte von der Eintrittsoptik zu der Austrittsoptik durchdringende Lichtmenge durch Einstellen der Transparenz der durchgehenden Schicht beeinflussbar ist, wobei
die durchgehende Schicht ein, zwei oder mehr in derselben Ebene liegende Segmente aufweist, wobei jedes einzelne Segment unabhängig von den anderen Segmenten hinsichtlich seiner Transparenz steuerbar ist, wobei die Eintrittsoptik als eine Vielzahl von Mikro-Eintrittsoptiken ausgebildet ist, die Austrittsoptik als eine Vielzahl von Mikro-Austrittsoptiken ausgebildet ist, wobei die Mikro-Eintrittsoptiken und die Mikro-Austrittsoptiken gruppenweise zueinander zugeordnet sind, und eine Vielzahl von optischen Mikro-Abbildungssystemen definieren, wobei jedes optische Mikro-Abbildungssystem eine Gruppe von Mikro-Eintrittsoptiken, eine Gruppe von Mikro-Austrittsoptiken und zumindest ein Segment der durchgehenden, hinsichtlich ihrer Transparenz steuerbaren Schicht umfasst, wobei das Lichtmodul eine Mehrzahl von unabhängig voneinander steuerbaren Lichtquellen umfasst, wobei zumindest ein erster Teil der Segmente dazu eingerichtet ist, eine Lichtverteilung eines ersten vorgegebenen Typs zu erzeugen, und zumindest ein zweiter Teil der Segmente dazu eingerichtet ist, eine Lichtverteilung eines zweiten vorgegebenen Typs zu erzeugen, wobei jedes einzelne Segment zumindest ein Untersegment umfasst und das zumindest eine Untersegment hinsichtlich seiner Transparenz steuerbar ist, und wobei jedes einzelne Segment zwei oder mehr, vorzugsweise fünf, in derselben Ebene liegende, vorzugsweise einander angrenzende, Untersegmente umfasst, wobei die Untersegmente unabhängig voneinander steuerbar sind, wobei die Untersegmente unterschiedliche Form und/ oder Größe aufweisen.

Dies impliziert, dass die Steuerung des entsprechenden (ersten, zweiten, dritten usw.) Teils der Segmente auf die Steuerung der(n) diesem Teil der Segmente zugeordneten Lichtquelle(n) abgestimmt ist, um eine Lichtverteilung des entsprechenden Typs (des ersten, des zweiten, des dritten usw.) zu erzeugen. Einem jedem Teil der Segmente ist zumindest eine der voneinander unabhängig steuerbaren Lichtquellen zugeordnet, wobei unterschiedlichen Teilen/Gruppen der Segmente unterschiedliche Lichtquellen zugeordnet sind, um die Steuerung zu erleichtern. D.h. jeder Teil der Segmente wird nur von der zumindest einen diesem Teil der Segmente zugeordneten Lichtquelle bestrahlt, wodurch eine Lichtverteilung eines vorgegebenen Typs erzeugt wird. Diese Zuordnung bringt auch den Vorteil, dass die unabhängig voneinander steuerbaren Lichtquellen unterschiedliche Leistung haben dürfen. Beispielsweise können die Lichtquellen, die dem zum Erzeugen einer Fahrtrichtungsanzeiger-Lichtverteilung eingerichteten Teil der Segmente zugeordnet sind, weniger stark sein als die Lichtquelle, die dem zum Erzeugen einer Abblendlichtverteilung eingerichteten Teil der Segmente zugeordnet sind.

Das Erzeugen Lichtverteilungen verschiedener Typen (erster Typ, zweiter Typ und so weiter) erfolgt vorzugsweise korreliert. Wie nachstehend erläutert, können dabei verschiedene Szenarien realisiert werden. Beispielsweise kann beim Passieren einer Stadtgrenze das Fernlicht ausgeschaltet (Teil-Fernlichtverteilung ist inaktiv) und gleichzeitig eine Begrüßungslicht-Lichtverteilung oder je nach Situation Warnungslicht-Lichtverteilung aktiviert werden. Es ist zweckmäßig, die Steuerung eines jeden Teils der Segmente mit der Steuerung der diesem Teil der Segmente beziehungsweise der Mirko-Abbildungssysteme zugeordneten Lichtquelle(n) abzustimmen.

Im Zusammenhang mit der vorliegenden Erfindung wird unter dem Begriff "Lichtverteilung eines vorgegebenen Typs" eine von einem Kraftfahrzeugscheinwerfer abgestrahlte Lichtverteilung verstanden, die einer Lichtfunktion eines Kraftfahrzeugscheinwerfers entspricht (Fernlicht, Abblendlicht, Abbiegelicht, Blinker etc.) und vorzugsweise einer gesetzlichen Norm entspricht.

Ein solches Lichtmodul weist beispielsweise mehrere Hauptlichtfunktionen auf, die während des Betriebs des Lichtmodul verändert (zwischen einander geschaltet) werden können.

Es kann vorgesehen sein, dass die durchgehende Schicht als eine Flüssigkristallschicht, beispielsweise eine Flüssigkristallanzeige, ausgebildet ist.

Darüber hinaus kann es zweckdienlich sein, wenn alle Segmente in einer vertikalen, Ebene liegen und vorzugsweise einander angrenzen. Beispielsweise kann ein Segment als ein Pixel der Flüssigkristallanzeige ausgebildet sein.

Die Begriffe "vertikal" und "horizontal" beziehen sich auf eine fachübliche, zweckmäßige Einbaulage des Lichtmoduls in einem Kraftfahrzeugscheinwerfer, wenn dieser Kraftfahrzeugscheinwerfer in einer betriebsmäßigen Lage ist. Unter der betriebsmäßigen Lage wird dabei jene Lage verstanden, in der der Kraftfahrzeugscheinwerfer in einem Kraftfahrzeug verbaut ist oder beispielsweise in einem lichttechnischen Labor einer Untersuchung einer von dem Kraftfahrzeugscheinwerfer abgestrahlten Lichtverteilung unterzogen wird.

Erfindungsgemäß ist es vorgesehen, dass jedes einzelne Segment zumindest ein Untersegment umfasst und das zumindest eine Untersegment hinsichtlich seiner Transparenz steuerbar ist.

Es ist außerdem erfindungsgemäß vorgesehen, dass jedes einzelne Segment zwei oder mehr, vorzugsweise fünf, in derselben Ebene liegende, vorzugsweise einander angrenzende, Untersegmente umfasst, wobei die Untersegmente unabhängig voneinander steuerbar sind.

Es ist erfindungsgemäß vorgesehen, dass die Untersegmente unterschiedliche Form und/oder Größe aufweisen.

Darüber hinaus kann es zweckdienlich sein, wenn jedes Mikro-Abbildungssystem genau eine Mikro-Eintrittsoptik, genau eine Mikro-Austrittsoptik und genau ein Segment der durchgehenden, hinsichtlich ihrer Transparenz steuerbaren Schicht aufweist.

Üblicherweise besteht ein LCD (Liquid Crystal Display - Flüssigkeitskristall-Display) aus einzelnen rechteckigen Pixeln, aus denen das gewünschte Lichtbild zusammengesetzt werden kann. Nachteilig dabei ist, dass mit rechteckigen Pixeln eine sehr hohe Auflösung (ca. 10000 bis 14000 ppi, beispielsweise von 12700 ppi) notwendig wäre, um beispielsweise eine Abblendlichtverteilung oder Fernlichtverteilung zu schaffen. Dies wäre zum Beispiel dann der Fall, wenn das gewünschte Lichtbild - eine Gesamtlichtverteilung, wie Abblendlichtverteilung oder Fernlichtverteilung - als eine Gesamtheit einzelner Mikro-Lichtbilder entsteht, wobei die Mikro-Lichtbilder von einem System aus Mikro-einer Eintrittsoptik, einer Mikro-Austrittsoptik und einer dazwischen liegenden Blende erzeugt werden. Würde man nun die durchgehende Schicht, beispielsweise die Flüssigkristallanzeige als eine Blende verwenden, würde es von der Flüssigkristallanzeige eine, wie oben beschrieben, sehr hohe Auflösung erfordern.

Daher kann es vorteilhaft sein, wenn die einzelnen Segmente und/oder Untersegmente eine Form und/oder Größe aufweisen, welche jeweils einem Teil der zu erzeugenden Lichtverteilung entspricht/entsprechen. Man kann sagen, dass ein Segment beziehungsweise Untersegment einem Pixel entspricht und die Pixel einzeln ansteuerbar sind.

Ein weiterer Vorteil ergibt sich, wenn jeder Lichtquelle ein Kollimator vorgelagert ist und jede Lichtquelle zum Erzeugen einer vorbestimmten Lichtverteilung eingerichtet ist. Weiters kann es vorteilhaft sein, dass zwischen der Lichtquelle, beispielsweise der LED-Lichtquelle, und dem Mikro-Abbildungssystem und/oder der durchgehenden Schicht, beispielsweise Flüssigkristallanzeige ein polarisierendes Element, beispielsweise ein polarisierender Strahlteiler, zum Erzeugen linear polarisierten Lichtes vorgesehen ist. Es kann zweckmäßig sein, den Kollimator zwischen der Lichtquelle und der Eintrittsoptik anzuordnen, damit das Licht in Form paralleler Lichtstrahlen auf die Eintrittsoptik trifft.

Außerdem kann vorgesehen sein, dass die Lichtquellen auf einer, vorzugsweise quer zu einer Hauptabstrahlachse des Lichtmoduls angeordneten Platine angeordnet sind, beispielsweise eine 4x3 matrixartige Anordnung bilden, und vorzugsweise Licht in unterschiedlichen Farben abstrahlen.

Besonders vorteilhaft ist, wenn das Lichtmodul dazu eingerichtet ist, mehrere Lichtverteilungen zu erzeugen, wobei der Typ jeder Lichtverteilung aus folgender Liste der Typen gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Fahrtrichtungsanzeiger-Lichtverteilung;
*) Positionslicht-Lichtverteilung;
*) Blendfreies Fernlicht-Lichtverteilung;
*) Lauflichteffekt-Lichtverteilung.

Weiters kann mit Vorteil vorgesehen sein, dass dem Lichtmodul eine Steuervorrichtung zugeordnet ist, welche Steuervorrichtung dazu eingerichtet ist, die Transparenz der durchgehenden Schicht zu steuern, wobei die Steuervorrichtung vorzugsweise in dem Lichtmodul angeordnet ist.

Die Erfindung wird nachstehend anhand beispielhafter nichteinschränkender Ausführungsformen näher erläutert, die in einer Zeichnung veranschaulicht sind. In dieser zeigt:
Fig. 1 ein Kraftfahrzeugscheinwerferlichtmodul mit einem optischen Abbildungssystem mit zumindest einer Strahlformungsvorrichtung, und
Fig. 2 eine als eine Flüssigkristallanzeige ausgebildete durchgehende Schicht mit Untersegmente aufweisenden Segmenten.

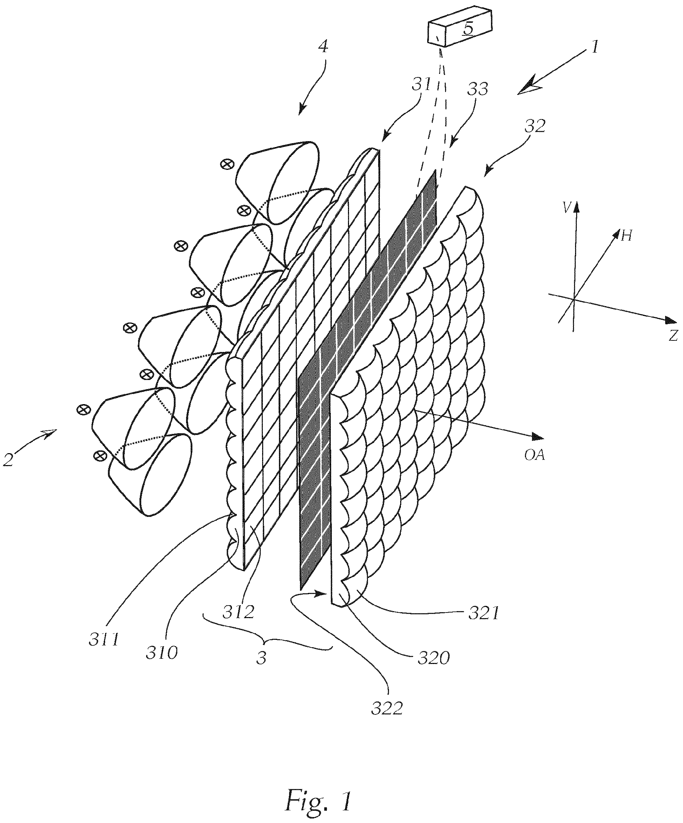

Zunächst wird auf Figur 1 Bezug genommen. Diese zeigt ein

Kraftfahrzeugscheinwerferlichtmodul 1, das dem erfindungsgemäßen Lichtmodul entspricht. Das Kraftfahrzeugscheinwerferlichtmodul 1 umfasst mehrere Lichtquellen 2. Figur 1 zeigt acht Lichtquellen 2 und kann beispielsweise in einem Kraftfahrzeugscheinwerfer (hier nicht gezeigt) angeordnet beziehungsweise eingebaut sein. Weiters umfasst das Kraftfahrzeugscheinwerferlichtmodul 1 ein optisches Abbildungssystem 3, welches (im Wesentlichen gesamtes) von den Lichtquellen 2 erzeugtes Licht (wenn die Lichtquellen 2 eingeschaltet sind) in einen Bereich vor dem Kraftfahrzeugscheinwerferlichtmodul 1, also in Richtung Z, welche Richtung Z mit der Vorwärtsfahrtrichtung eines Kraftfahrzeug übereinstimmt, wenn sich das Kraftfahrzeugscheinwerferlichtmodul 1 in einer ordnungsgemäßen Einbaulage in einem Kraftfahrzeug befindet, in Form von zumindest einer Lichtverteilung eines vorgegebenen Typs abbildet. Die Richtung Z kann beispielsweise parallel zu der optischen Achse OA beziehungsweise zu der Hauptabstrahlachse des Kraftfahrzeugscheinwerferlichtmoduls verlaufen. Vorzugsweise fällt die Hauptabstrahlrichtung mit der optischen Achse OA (und mit der Richtung Z) zusammen. Die Lichtquellen 2 können beispielsweise als LED-Lichtquellen ausgebildet sein, welche LED-Lichtquellen vorzugsweise auf einer Platine (nicht gezeigt) angeordnet sind. Die Platine steht zweckmäßigerweise quer zu der optischen Achse OA des Kraftfahrzeugscheinwerferlichtmoduls 1. Das von den eingeschalteten Lichtquellen 2 erzeugte Licht kann von optional vorgesehenen Kollimatoren 4 aufgefangen und in Form von parallelem Licht in Richtung des optischen Abbildungssystems 3 geleitet werden.

Das optische Abbildungssystem 3 weist eine Eintrittsoptik 31, eine Austrittsoptik 32, und zumindest eine Strahlformungsvorrichtung 33 auf. Die Strahlformungsvorrichtung 33 ist in die Hauptabstrahlrichtung (parallel zur Richtung Z) nach der Eintrittsoptik 31 und vor der Austrittsoptik 32 - also zwischen der Eintrittsoptik 31 und der Austrittsoptik 32 - angeordnet. Der Figur 1 ist zu entnehmen, dass die Eintrittsoptik 31, die Austrittsoptik 32, und die zumindest eine Strahlformungsvorrichtung 33 vorzugsweise in zueinander im Wesentlichen parallel liegenden, zur Richtung Z senkrecht (vertikal) stehenden Ebenen angeordnet sind. Die Eintrittsoptik 31 ist dazu eingerichtet, das (im Wesentlichen gesamte, das heißt ohne große Verluste) Licht der Lichtquellen 2 aufzufangen, und in Form mehrerer Lichtbündel in Richtung der Strahlformungsvorrichtung 33 zu leiten. Wie bereits erwähnt, kann das Licht der Lichtquellen 2 durch einen oder mehrere Kollimatoren 4 kollimiert werden, bevor es auf die Eintrittsoptik 31 trifft. Die Eintrittsoptik 31 kann als ein Mikro-Eintrittsoptik-Array aus mehreren in derselben Ebene (in der (vertikalen) Ebene der Eintrittsoptik 31) matrixartig angeordneten Mikro-Eintrittsoptiken 310 ausgebildet sein. Solche Mikro-Eintrittsoptik-Arrays wurden bereits in einigen in der Beschreibungseinleitung zitierten Anmeldungen der Anmelderin thematisiert (WO 2015/058227 A1; WO 2017/066817 A1; WO 2017/066818 A1). Für weitere Mikro-Eintrittsoptik-Arrays betreffende Details, die hiermit in die gegenständliche Anmeldung aufgenommen werden, wird auf die entsprechenden Stellen dieser Anmeldungen verwiesen. Jede Mikro-Eintrittsoptik 310 weist eine den Lichtquellen 2 zugewandte Lichteintrittsseite 311 und eine den Lichtquellen 2 abgewandte Lichtaustrittsseite 312 auf. Figur 1 zeigt Mikro-Eintrittsoptiken 310, wobei jede Mikro-Eintrittsoptik 310 eine in etwa plane, beispielsweise rechteckige, insbesondere quadratische Lichtaustrittsseite 312 und eine gekrümmte, in etwa konvex gekrümmte Lichteintrittsseite 311 aufweist. An dieser Stelle sei darauf hingewiesen, dass eine eben beschriebene Ausgestaltung der Lichteintritts- und Lichtaustrittsseiten der Mikro-Eintrittsoptiken nicht zwingend sind. Wie es beispielsweise aus der Anmeldung WO 2017/066817 A1 bekannt ist, kann es vorteilhaft sein, die Lichteintrittsseiten 311 in etwa plan und die Lichtaustrittsseiten 312 gekrümmt auszubilden. Zumindest eine Wirkung der Eintrittsoptik 31 ist, das von den Lichtquellen 2 abgestrahlte Licht aufzuteilen und vorzuformen.

Das in mehrere Lichtbündel aufgeteilte und vorgeformte Licht trifft auf die Strahlformungsvorrichtung 33. Zumindest eine Eigenschaft der Strahlformungsvorrichtung 33 ist, dass diese die mehreren Lichtbündel zu zumindest einem Zwischenbild eines vorgegebenen Typs formt. Dabei ist die Strahlformungsvorrichtung 33 vorzugsweise in einer Brennebene der Austrittsoptik 32 angeordnet. Wie aus dem oben angeführten Stand der Technik bekannt ist kann dieses Formen beispielsweise mithilfe von Blendenvorrichtungen erfolgen, welche beispielsweise als eine Metallschicht mit mehreren Durchbrüchen, welche optisch aktive Kanten aufweisen, ausgebildet sein können. Dabei geht das auf eine solche Beleuchtungsvorrichtung treffende Licht durch die Durchbrüche ungehindert durch. Trifft das Licht auf einen nicht durchbrochenen Bereich der Beleuchtungsvorrichtung, so wird es reflektiert. Durch Gestalten der Durchbrüche und insbesondere der Form und des Verlaufs der optisch aktiven Kanten lässt sich die erzeugte Lichtverteilung beeinflussen. Für weitere Details wird ebenfalls auf die Dokumente (WO 2015/058227 A1; WO 2017/066817 A1; WO 2017/066818 A1) verwiesen.

Bevor nun auf eine Strahlformungsvorrichtung, die der erfindungsgemäßen Strahlformungsvorrichtung entspricht, eingegangen wird, sollen die Eigenschaften und die Form der in Figur 1 gezeigten Austrittsoptik 32 kurz umrissen werden.

Die Austrittsoptik 32 kann als ein Mikro-Austrittsoptik-Array aus mehreren in derselben Ebene matrixartig angeordneten Mikro-Austrittsoptiken 320 ausgebildet sein. Solche Mikro-Austrittsoptik-Arrays wurden bereits in einigen in der Beschreibungseinleitung zitierten Anmeldungen der Anmelderin thematisiert (WO 2015/058227 A1; WO 2017/066817 A1; WO 2017/066818 A1). Für weitere Mikro-Eintrittsoptik-Arrays betreffende Details, die hiermit in die gegenständliche Anmeldung aufgenommen werden, wird auf die entsprechenden Stellen dieser Anmeldungen verwiesen. Jede Mikro-Austrittsoptik 320 weist eine den Lichtquellen 2 und den Lichtaustrittsseiten 312 der Mikro-Eintrittsoptiken 310 zugewandte, vorzugsweise plane, beispielsweise rechteckige, insbesondere quadratische Lichteintrittsseite 321 und eine den Lichtquellen 2 und den Lichtaustrittsseiten 312 der Mikro-Eintrittsoptiken 310 abgewandte, vorzugsweise gekrümmte, beispielsweise konvexe Lichtaustrittsseite 322 auf. Die Austrittsoptik 32 ist dazu eingerichtet, das zumindest eine Zwischenbild eines vorgegebenen Typs in Form der zumindest einen Lichtverteilung eines vorgegebenen Typs in den einen Bereich vor dem Kraftfahrzeugscheinwerferlichtmodul 1 zu projizieren.

Erfindungsgemäß ist die Strahlformungsvorrichtung 33 als eine durchgehende, sich in einer quer zur optischen Achse OA des optischen Abbildungssystems 3 (und des Kraftfahrzeugscheinwerferlichtmoduls 1) stehenden Ebene erstreckende Schicht ausgebildet. Der Begriff "durchgehend" bedeutet beispielsweise, dass die Schicht keine Durchbrüche, wie die aus dem Stand der Technik bekannten Beleuchtungsvorrichtungen, aufweist. Die Ebene, in der sich die durchgehende Schicht 33 erstreckt ist mit Vorzug zu jenen Ebenen parallel angeordnet, in den die Eintrittsoptik 31 und die Austrittsoptik 32 liegen. Eine der bevorzugten Eigenschaften des optischen Abbildungssystems 3 ist, dass die Eintrittsoptik 31, die Austrittsoptik 32 und die durchgehende Schicht 33 in zueinander parallelen, normal zu der optischen Achse OA liegenden Ebenen angeordnet sind. Eine weitere bevorzugte Eigenschaft des optischen Abbildungssystems 3 ist, dass die durchgehende Schicht 33 zwischen der Eintrittsoptik 31 und der Austrittsoptik 32 in der beziehungsweise nah an der Zwischenbildebene, vorzugsweise in der beziehungsweise nah an der Brennebene der Austrittsoptik 32 angeordnet ist. Darüber hinaus ist es vorteilhaft, wenn die durchgehende Schicht 33 derart angeordnet ist, dass das gesamte durch die Eintrittsoptik 31 gebündelte und/oder vorgeformte Licht der Lichtquellen 2 durch die durchgehende Schicht 33 zum Formen des Zwischenbilds verwendet wird. Es sei an dieser Stelle betont, dass diese Eigenschaften des optischen Abbildungssystems 3 nicht nur das in Figur 1 dargestellte Kraftfahrzeugscheinwerferlichtmodul 1, sondern auch andere Ausführungsformen der vorliegenden Erfindung charakterisieren können.

Die durchgehende Schicht 33 ist hinsichtlich ihrer Transparenz steuerbar. Der Begriff Transparenz bezieht sich auf die Eigenschaft der durchgehenden Schicht 33 elektromagnetische Wellen, vorzugsweise Licht in einem für den Menschen sichtbaren Spektralbereich hindurchzulassen. Zweckmäßig ist, wenn die Transparenz der durchgehenden Schicht 33 in einem großen Bereich einstellbar ist, das heißt von lichtundurchlässig - die zu der Austrittsoptik 32 durchdringende Lichtmenge wird im Wesentlichen auf null reduziert - bis zu völlig transparent - gesamtes Licht wird von der Eintrittsoptik 31 zu der Austrittsoptik 32 durchgelassen. Weiters ist es vorteilhaft, wenn die durchgehende Schicht 33 hinsichtlich ihrer Transparenz bereichsweise steuerbar ist. Das heißt die durchgehende Schicht kann derart steuerbar sein, dass sie beispielsweise in vorgegebenen Bereichen Licht teilweise oder ganz durchlässt in den anderen, ebenfalls vorgegebenen Bereichen das Licht abblockt. Die Bereiche und die Steuerung der durchgehenden Schicht 33 kann durch eine dem Kraftfahrzeugscheinwerferlichtmodul 1 zugeordnete oder in diesem angeordnete Steuervorrichtung 5 erfolgen (gestrichelte Linien). Die Steuervorrichtung 5 kann beispielsweise ein Speichermedium mit einem von der Steuervorrichtung 5 ausführbaren Software-Programm umfassen, welches Software-Programm, wenn es ausgeführt wird, die durchgehende Schicht 33 hinsichtlich ihrer Transparenz dementsprechend steuert. Durch beispielsweise bereichsweises Steuern der Transparenz der durchgehenden Schicht 33 kann das Zwischenbild und folglich das erzeugte Lichtbild (Lichtverteilung) modifiziert werden. Beispielsweise können bestimmte Bereiche gedimmt oder aufgehellt werden, je nach Zweck und Typ der Lichtverteilung. Der Typ einer abgestrahlten Lichtverteilung kann ebenfalls durch Steuern geändert werden. Die durchgehende Schicht 33 kann also wie eine "Blende" verwendet werden, deren Blendenkanten entsprechend der bezüglich ihrer Transparenz gesteuerten Segmente verändert werden können.

Die in der Figur 1 gezeigte durchgehende Schicht 33 kann auch als Träger für die Eintrittsoptik 31 und die Austrittsoptik 32 ausgebildet sein. Beispielsweise kann die durchgehende Schicht 33 beidseitig - sowohl von einer der Eintrittsoptik 31 zugewandten Seite als auch von einer der Austrittsoptik 32 zugewandten Seite - von Glasplatten umgeben sein beziehungsweise in diese Glasplatten eingebettet sein, wobei diese Glasplatten jeweils als Träger für die Eintrittsoptik 31 und die Austrittsoptik 32 fungieren. Beispielsweise können bei der Herstellung des optischen Abbildungssystems 3 die Eintrittsoptik 31 und die Austrittsoptik 32 auf die Glasplatten, beispielsweise durch Verkleben mit einem UV härtenden Kleber, aufgebracht werden.

Vorzugsweise ist die durchgehende Schicht 33 als eine Flüssigkristallschicht, beispielsweise eine Flüssigkristallanzeige, ausgebildet. Dabei versteht der Fachmann, dass eine Flüssigkristallanzeige neben der Flüssigkristallschicht auch entsprechende Polarisatoren beinhaltet.

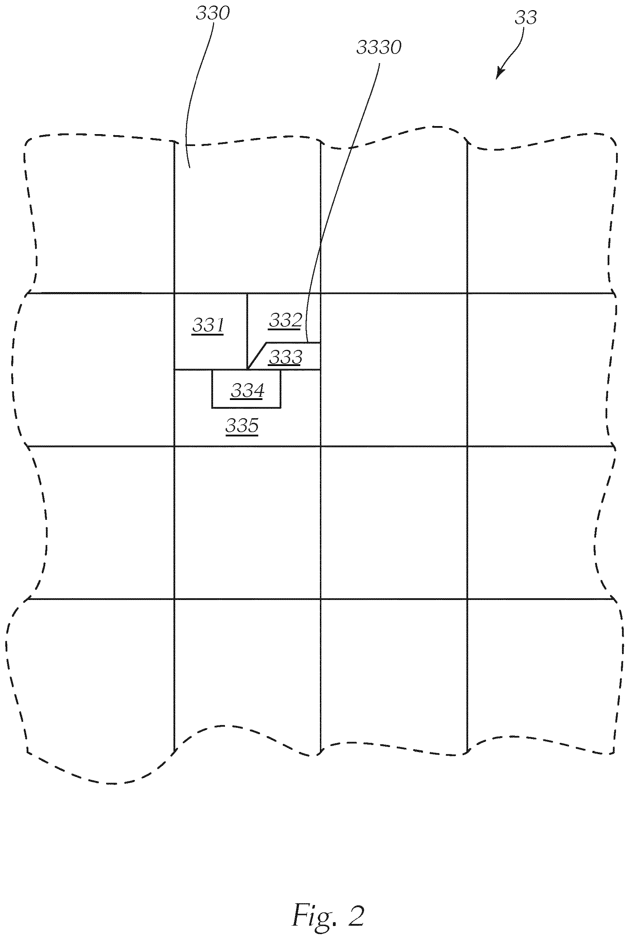

Vorzugsweise ist die erfindungsgemäße durchgehende Schicht als eine Flüssigkristallanzeige ausgebildet. Figur 2 zeigt eine als eine Flüssigkristallanzeige ausgebildete durchgehende Schicht 33. Diese Schicht kann beispielsweise in dem in der Figur 1 gezeigten optischen Abbildungssystem 3 eingesetzt werden. Aus diesem Grund wird für die durchgehende Schicht dasselbe Bezugszeichen verwendet. Die durchgehende Schicht 33 weist mehrere quadratische, in derselben Ebene liegende, vorzugsweise einander angrenzende Segmente, beispielsweise Flüssigkristallanzeige-Segmente 330 auf. Es versteht sich, dass die Segmente 330 nicht quadratisch sein müssen. Zweckdienlich ist aber, wenn die Form der Segmente 330 an die Form der Grundflächen der Lichtaustrittsseiten 312 der Mikro-Eintrittsoptiken 310 und an die Form der Grundflächen der Lichteintrittsseiten 322 der Mikro-Austrittsoptiken 320 angepasst ist. Auf diese Weise können eine Mikro-Eintrittsoptik 310, eine ihr zugeordnete Mikro-Austrittsoptik 320 und ein dazwischenliegendes Segment 330 zu einem einem erfindungsgemäßen Mikro-Abbildungssystem entsprechenden Mikro-Optiksystem zusammengefasst werden. Es versteht sich, dass eine beispielsweise konvex oder konkav ausgebildete Lichteintrittsseite oder Lichtaustrittsseite einer Linse, beispielsweise einer Mikro-Eintrittsoptik oder einer Mikro-Austrittsoptik quadratisch sein kann. Dies zeigt zum Beispiel die Figur 1.

Weiters ist es zweckmäßig, wenn die Eintrittsoptik 31, Austrittsoptik 32 und die durchgehende Schicht 33 derart in Bezug aufeinander angeordnet und/oder positioniert sind, dass jeder Mikro-Eintrittsoptik 310 genau ein Segment 330 und eine Mikro-Austrittsoptik 320 korrespondiert. Dabei ist es zweckdienlich, wenn die optischen Achsen der zueinander korrespondierenden Mikro-Eintrittsoptiken 310 und Mikro-Austrittsoptiken 320 zusammenfallen. Auf diese Weise kann das optische Abbildungssystem aus mehreren Mikro-Optiksystemen gebildet sein.

Wenn jedes einzelne Segment 330 unabhängig von den anderen Segmenten hinsichtlich seiner Transparenz steuerbar ist, können die Segmente 330 derart gesteuert werden, dass beispielsweise ein erster Teil der Segmente 330 dazu verwendet wird, dass das Kraftfahrzeugscheinwerferlichtmodul 1 eine Lichtverteilung eines ersten vorgegebenen Typs erzeugt, und ein zweiter Teil der Segmente 330 dazu verwendet wird, dass das Kraftfahrzeugscheinwerferlichtmodul 1 eine Lichtverteilung eines zweiten vorgegebenen Typs erzeugt. Darüber hinaus ist es denkbar, dass die Steuerung der Segmente 330 beispielsweise korreliert geschieht. Dabei können die Segmente 330 entweder einzeln oder gruppiert gesteuert werden, wobei entsprechend die Steuerung entweder der einzelnen Segmente 330 oder der Gruppen der Segmente aufeinander abgestimmt werden kann. Jede Gruppe der Segmente 330 kann auch in Abhängigkeit von der(n) dieser Gruppe der Segmente 330 beziehungsweise der entsprechenden Gruppe der Mikro-Abbildungssysteme zugeordneten Lichtquelle(n) gesteuert werden.

Auf diese Weise ist es beispielsweise möglich, verschiedene dynamische, gesetzlich vorgeschriebene Lichtverteilungen gleichzeitig oder abwechselnd zu erzeugen aber auch Begrüßungs- und/oder Warnungsszenarien zu verwirklichen. Zum Beispiel kann dabei ein kurzes Aufleuchten eines durch das Lichtmodul erzeugten Musters in Frage kommen. Denkbar ist auch, sich schnell innerhalb weniger Sekunden änderndes dynamisches Muster abzuspielen, ohne dabei die Lichtfunktion (z.B. Abblend-, Fern- oder Stadtlicht) des Kraftfahrzeugscheinwerferlichtmoduls 1 - d.h. die von dem Kraftfahrzeugscheinwerferlichtmodul 1 erzeugte Gesamtlichtverteilung (z.B. Abblend-, Fern- oder Stadtlicht-Lichtverteilung) - zu ändern. Somit können für einen Betrachter beispielsweise Lauflichteffekte entstehen/verwirklicht werden, die abgestrahlte Lichtverteilung (Gesamtlichtverteilung) kann aber gleich bleiben. Für weitere Details zu solchen sogenannten Leuchtstrukturen darf an dieser Stelle auf eine österreichische Patentanmeldung der Anmelderin AT 517308 A1 verwiesen werden. Z.B. kann ein einem "Wischblinker" ähnlicher Lauflichteffekt, der heutzutage bei Fahrtrichtungsanzeigern durch nacheinander Einschalten von in einer Reihe angeordneten LEDs realisiert wird, bei unveränderter Abblendlichtfunktion und/oder "Welcome-light" Funktionen wie etwa das stilisierte öffnen und schließen der Kraftfahrzeugscheinwerfer (der "Augen" des Fahrzeuges) usw.

Weiter ist der Figur 2 zu entnehmen, dass jedes einzelne Segment 330 Untersegmente, beispielsweise Flüssigkristallanzeige-Untersegmente umfassen kann. Figur 2 zeigt ein Flüssigkristallanzeige-Segment, welches fünf Flüssigkristallanzeige-Untersegmente 331 bis 335 aufweist. Die Flüssigkristallanzeige-Untersegmente 331 bis 335 weisen unterschiedliche Formen auf und sind unterschiedlich groß. Im Allgemeinen sind die Flüssigkristallanzeige-Untersegmente dazu eingerichtet, eine in einen bestimmten Bereich einer von dem Kraftfahrzeugscheinwerferlichtmodul erzeugten Lichtverteilung abgestrahlte Lichtmenge zu steuern beziehungsweise zu kontrollieren. In diesem Sinne können die Untersegmente, beispielsweise die Flüssigkristallanzeige-Untersegmente 331 bis 335 bestimmten Bereichen einer von dem Kraftfahrzeugscheinwerferlichtmodul erzeugten Lichtverteilung korrespondieren. Der Fachmann erkennt zum Beispiel zweifelsohne, dass eine Kante 3330 eines Flüssigkristallanzeige-Untersegmentes 333 der Figur 2 zum Abbilden eines Teils einer unsymmetrisch verlaufenden Hell-Dunkel-Grenze einer Abblendlichtverteilung vorgesehen ist. Ein weiteres Flüssigkristallanzeige-Untersegment 334 kann zum Beispiel zum Erzeugen einer sogenannten Signlight-Lichtverteilung, also einer Lichtverteilung zum Beleuchten von Verkehrsschildern oberhalb der Fahrbahn, vorgesehen sein kann. Es sei an dieser Stelle angemerkt, dass eine Signlight-Lichtverteilung an einem Messschirm (aufgestellt in einer ca. 25 Meter Entfernung vor einem zu testenden Kraftfahrzeugscheinwerferlichtmodul beziehungsweise Kraftfahrzeugscheinwerfer quer zu seiner optischen Achse) in einem Lichttechniklabor vorzugsweise einen oberen Bereich der Zone III nach ECE-R123 beleuchtet.

Um beispielsweise eine hohe Flexibilität in der Auswahl des Typs der zu erzeugenden Lichtverteilung zu erreichen, ist es zweckdienlich, wenn jedes Untersegment einzeln und vorzugsweise unabhängig voneinander hinsichtlich seiner Transparenz steuerbar ist. Mithilfe der in Figur 2 dargestellten Flüssigkristallanzeige 33 kann beispielsweise eine Abblendlichtverteilung erzeugt werden, indem die Flüssigkristallanzeige-Untersegmente 331 und 332 in einem völlig transparenten (lichtdurchlässigen) Modus betrieben werden, d.h. das auf sie treffende Licht vollkommen transmittieren, und die Flüssigkristallanzeige-Untersegmente 333 bis 335 das Licht komplett abblocken, d.h. völlig lichtundurchlässig sind. Dabei kann man die Abblendlichtverteilung mit der oben erwähnten Signlight-Lichtverteilung ergänzen, wenn die Transparenz des Flüssigkristallanzeige-Untersegments 334 ein wenig erhöht wird und dieses in etwa 1 bis 2% des einfallenden Lichts durchlässt. Der Offenbarung der Figur 2 kann der Fachmann unmittelbar und eindeutig entnehmen, dass mithilfe einer solchen Flüssigkristallanzeige 33 auch andere Lichtverteilungen, beispielsweise eine Signlight-Lichtverteilung, die beispielsweise zur Beleuchtung von oberhalb der Fahrbahn angebrachten Verkehrsschildern vorgesehen ist, oder eine Fernlichtverteilung realisiert werden können. Es versteht sich, dass nicht alle Segmente 330 eine gleiche Aufteilung der Untersegmente 331 bis 335 haben müssen. Je nach zu realisierende Lichtverteilung beispielsweise Gesamtlichtverteilung kann es vorteilhaft sein, dass ein erster Teil der Flüssigkristallanzeige 33 Segmente mit einer ersten Aufteilung der Segmente in Untersegmente, ein zweiter Teil der Flüssigkristallanzeige 33 Segmente mit einer zweiten Aufteilung der Segmente in Untersegmente aufweist und so weiter.

Zurückkommend auf Figur 1 zeigt diese die Eintrittsoptik 31 mit den in einem Array angeordneten Mikro-Eintrittsoptiken 310. Das heißt die Anordnung der Mikro-Eintrittsoptiken 310 ist matrixartig und weist beispielsweise N horizontale (Zeilen) und M vertikale Reihen auf. Die Austrittsoptik 32 ist ebenfalls aus in einem Array angeordneten Mikro-Austrittsoptiken 320 gebildet. Das Mikro-Austrittsoptik-Array weist beispielsweise N1 horizontale (Zeilen) und M1 vertikale Reihen auf, wobei vorzugsweise N=N1 und/oder M=M1 gilt. Die Mikro-Eintrittsoptiken 310 und die Mikro-Austrittsoptiken 320 sind vorzugsweise gruppenweise zueinander zugeordnet. Dabei heißt "gruppenweise", dass es zumindest einer Mikro-Eintrittsoptik 310 zumindest eine Mikro-Austrittsoptik 320 derart zugeordnet ist, dass das durch die zumindest eine Mikro-Eintrittsoptik 310 durchtretende Licht nur zu der zumindest einen der zumindest einen Mikro-Eintrittsoptik 310 zugeordneten Mikro-Austrittsoptik 320 durchdringen kann und vorzugsweise nicht auf andere, der zumindest einen Mikro-Eintrittsoptik 310 nicht zugeordnete Mikro-Austrittsoptiken 320 gelangt. Hier sind unterschiedliche Zuordnungen betreffend die Anzahl der Mikro-Eintrittsoptiken und Mikro-Austrittsoptiken denkbar. Beispielsweise kann einer Gruppe aus vier oder neun oder mehr Mikro-Eintrittsoptiken eine einzige Mikro-Austrittsoptik zugeordnet sein und *vice versa.* Figur 1 zeigt einen Fall, bei dem genau einer Mikro-Eintrittsoptik 310 genau eine Mikro-Austrittsoptik zugeordnet ist. Mithilfe dieser Zuordnung kann ein optisches Mikro-Abbildungssystem definiert werden. Dieses Mikro-Abbildungssystem umfasst beispielsweise eine erste Gruppe von Mikro-Eintrittsoptiken, eine zweite, der ersten Gruppe zugeordnete, Gruppe von Mikro-Austrittsoptiken und zumindest ein Segment der durchgehenden, hinsichtlich ihrer Transparenz steuerbaren Schicht. Dabei schließt der Terminus "Gruppe" die Zahl "1" nicht aus. Die Gruppe kann also aus einem einzigen Element bestehen.

Figur 1 zeigt acht Lichtquellen 2. Wie der Fachmann der vorliegenden Unterlagen unmittelbar und eindeutig entnehmen kann, kann ein erfindungsgemäßes Lichtmodul auch andere Anzahl von Lichtquellen umfassen. Es kann ganz nützlich sein wenn, jede Lichtquelle zum Erzeugen einer vorbestimmten Lichtverteilung eingerichtet ist. Zwecks Erzeugens von Lichtverteilungen verschiedener vorgegebener Typen kann es vorteilhaft sein, wenn das optische Abbildungssystem 3 mehrere verschiedene Bereiche aufweist, wobei jeder Bereich einer, vorzugsweise genau einer Lichtquelle 3 zugeordnet ist und zum Formen/Abbilden einer Lichtverteilung eines vorgegebenen Typs eingerichtet ist. Dabei können unterschiedliche Bereiche des optischen Abbildungssystems 3 zum Formen/Abbilden Lichtverteilungen unterschiedlicher vorgegebener Typen eingerichtet sein. Darüber hinaus können unterschiedliche Lichtquellen Licht in unterschiedlichen Farben abstrahlen (es ist z.B. denkbar amberfarbene Leuchtdioden (LEDs) neben den Lichtquellen in anderen Farbei, wie weiß (von warm bis zu kalt) oder blau, zu verwenden). Dies kann beispielsweise nützlich sein, wenn man mithilfe des Kraftfahrzeugscheinwerferlichtmoduls 1 sowohl eine Fahrtrichtungsanzeiger- als auch eine Tagfahrlicht- beziehungsweise eine Abblendlicht-Funktion zu realisieren gedenkt.

In der Praxis kann es nützlich sein, wenn zumindest ein Teil der Lichtquellen von den anderen Lichtquellen unabhängig ansteuerbar ist.

Das Kraftfahrzeugscheinwerferlichtmodul 1 kann beispielsweise dazu eingerichtet sein, mehrere Lichtverteilungen zu erzeugen, wobei der Typ jeder Lichtverteilung aus folgender Liste der Typen gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Fahrtrichtungsanzeiger-Lichtverteilung;
*) Positionslicht-Lichtverteilung;
*) Blendfreies Fernlicht-Lichtverteilung;
*) Lauflichteffekt-Lichtverteilung.

Bezugnehmend auf die oben erwähnte Steuervorrichtung 5 versteht es sich, dass die Steuervorrichtung 5 zum Steuern der Transparenz der Segmente 330 und/oder der Untersegmente 331 bis 335 der durchgehenden Schicht 33, beispielsweise der Flüssigkristallanzeige eingerichtet sein können. Insbesondere kann die Steuervorrichtung 5 dazu eingerichtet sein, die einzelnen Segmente 330 und/oder Untersegmente 331 bis 335 einzeln und vorzugsweise unabhängig voneinander zu steuern.

Zusammenfassend kann mit der vorliegenden Erfindung Erhöhung der Funktionalität eines Lichtmodules erzielt werden, insbesondere wenn die Eintrittsoptik und die Austrittsoptik als Mikrolinsen-Arrays ausgebildet sind. Im letzten Fall können mithilfe Mikro-Optiksysteme (Mikro-Abbildungssysteme) beispielsweise identische Mikro-Lichtbilder (Mikro-Lichtverteilungen) erzeugt werden, die zusammen das gesamte Lichtbild (gesamte Lichtverteilung) bilden, wobei es möglich ist, jedes Segment mit geringerer Intensität auszuleuchten, im Vergleich zu einem herkömmlichen Lichtmodul, in dem nur ein einziges Projektionsmodul die gesamte Lichtverteilung erzeugen muss. Dadurch kann beispielsweise thermische Belastung der beispielsweise als LC-Element (Flüssigkristallanzeige) ausgebildeten durchgehenden Schicht verringert werden. Weiters kann das erfindungsgemäße Lichtmodul mehrere Lichtverteilungen unterschiedlicher Typen erzeugen, wobei das diese Lichtverteilungen bildende Licht aus genau einer Austrittsoptik, d.h. aus einem - für verschiedene Lichtverteilungen - gemeinsamen Mikro-Austrittsoptik-Array, austritt. Dies führt nicht nur dazu, dass der zur Verfügung stehende Bauraum aufgrund der Teilung der Lichtaustrittsfläche besser ausgenutzt wird, sondern auch dazu, dass es beim Betrachter ein besserer Eindruck entsteht.

Darüber hinaus können optisch ansprechende und zugleich hoch funktionale Lichtlösungen auf dem Gebiet der KFZ-Lichttechnik geschaffen werden.

Weiters kann bei gleichbleibendem Lichtbild - bei gleichbleibender mithilfe des Lichtmoduls erzeugten Lichtverteilung - das Lichtmodul selbst, animiert werden. Z.B. Lauflichteffekt ähnlich eines "Wischblinkers" bei unveränderter Abblendlicht-funktion, "Welcome-light" Funktionen wie etwa das stilisierte öffnen und schließen der "Augen" des Fahrzeuges, etc.

Anhand der Figurenbeschreibung und der Beschreibungseinleitung ist dem Fachmann natürlich klar, dass ein einsatzfähiges Lichtmodul beziehungsweise Kraftfahrzeugscheinwerfer mit einem oben genannten Lichtmodul andere Teile, wie beispielsweise Kühlkörper, Tragrahmen, mechanische und/oder elektrische Stellvorrichtungen, Abdeckungen und so weiter und sofort, aufweisen kann. Darüber hinaus ist dem Fachmann die Funktionsweise dieser Teile bewusst. Der Einfachheit der Darstellung halber wird hier auf die Beschreibung dieser standardmäßigen Bauteile eines Kraftfahrzeuglichtmoduls beziehungsweise Kraftfahrzeugscheinwerfers verzichtet.

Die Aufgabe dieser Beschreibung besteht lediglich darin, veranschaulichende Beispiele bereitzustellen und weitere Vorteile und Besonderheiten der vorliegenden Erfindung anzugeben, und somit kann sie nicht als Einschränkung des Anwendungsgebiets der Erfindung bzw. der in den Ansprüchen beanspruchten Patentrechte interpretiert werden. Die Bezugsziffern in den Ansprüchen und in der Beschreibung dienen lediglich zu einem besseren Verständnis der vorliegenden Anmeldung und sollen auf gar keinen Fall als eine Beschränkung des Gegenstands der vorliegenden Erfindung angesehen werden.

Solange es sich nicht aus der Beschreibung einer der oben genannten Ausführungsformen zwangsläufig ergibt, wird davon ausgegangen, dass die beschriebenen Ausführungsformen beliebig miteinander kombiniert werden können. Unter anderem bedeutet dies, dass auch die technischen Merkmale einer Ausführungsform mit den technischen Merkmalen einer anderen Ausführungsform einzeln und unabhängig voneinander nach Belieben kombiniert werden können, um auf diese Weise zu einer weiteren Ausführungsform derselben Erfindung zu gelangen.

## Patentansprüche

1. Lichtmodul für einen Kraftfahrzeugscheinwerfer, welches Lichtmodul umfasst:
*) zumindest eine Lichtquelle (2) sowie
*) zumindest ein optisches Abbildungssystem (3), welches optische Abbildungssystem (3) von der zumindest einen Lichtquelle (2) erzeugtes Licht in einen Bereich vor dem Lichtmodul (1) in Form von zumindest einer Lichtverteilung eines vorgegebenen Typs abbildet, wobei das optische Abbildungssystem (3) aufweist:
- ) eine Eintrittsoptik (31)
- ) eine Austrittsoptik (32), und
- ) zumindest eine Strahlformungsvorrichtung (33), wobei die Strahlformungsvorrichtung (33) zwischen der Eintrittsoptik (31) und der Austrittsoptik (32) angeordnet ist, wobei
*) die Eintrittsoptik (31) dazu eingerichtet ist, das von der zumindest einen Lichtquelle (2) erzeugte Licht aufzufangen, und in Form mehrerer Lichtbündel in Richtung der Strahlformungsvorrichtung (33) zu leiten,
*) die Strahlformungsvorrichtung (33) dazu eingerichtet ist, die mehreren Lichtbündel zu zumindest einem Zwischenbild eines vorgegebenen Typs zu formen, und
*) die Austrittsoptik (32) dazu eingerichtet ist, das zumindest eine Zwischenbild eines vorgegebenen Typs in Form der zumindest einen Lichtverteilung eines vorgegebenen Typs in den einen Bereich vor dem Lichtmodul (1) zu projizieren, wobei
die Strahlformungsvorrichtung (33) als eine durchgehende, sich in einer quer zur optischen Achse (OA) des optischen Abbildungssystems (3) stehenden Ebene erstreckende Schicht ausgebildet ist, wobei die durchgehende Schicht hinsichtlich ihrer Transparenz steuerbar ist und die gesamte von der Eintrittsoptik (31) zu der Austrittsoptik (32) durchdringende Lichtmenge durch Einstellen der Transparenz der durchgehenden Schicht beeinflussbar ist, wobei
die durchgehende Schicht ein, zwei oder mehr in derselben Ebene liegende Segmente (330) aufweist, wobei
jedes einzelne Segment unabhängig von den anderen Segmenten (330) hinsichtlich seiner Transparenz steuerbar ist, wobei
die Eintrittsoptik (31) als eine Vielzahl von Mikro-Eintrittsoptiken (310) ausgebildet ist,
die Austrittsoptik (32) als eine Vielzahl von Mikro-Austrittsoptiken (320) ausgebildet ist, wobei
die Mikro-Eintrittsoptiken (310) und die Mikro-Austrittsoptiken (320) gruppenweise zueinander zugeordnet sind, und eine Vielzahl von optischen Mikro-Abbildungssystemen definieren, wobei jedes optische Mikro-Abbildungssystem eine Gruppe von Mikro-Eintrittsoptiken (310), eine Gruppe von Mikro-Austrittsoptiken (320) und zumindest ein Segment (330) der durchgehenden, hinsichtlich ihrer Transparenz steuerbaren Schicht (33) umfasst, wobei
das Lichtmodul (1) eine Mehrzahl von unabhängig voneinander steuerbaren Lichtquellen (2) umfasst,
wobei zumindest ein erster Teil der Segmente (330) dazu eingerichtet ist, eine Lichtverteilung eines ersten vorgegebenen Typs zu erzeugen, und zumindest ein zweiter Teil der Segmente (330) dazu eingerichtet ist, eine Lichtverteilung eines zweiten vorgegebenen Typs zu erzeugen, wobei jedes einzelne Segment (330) zumindest ein Untersegment (331 bis 335) umfasst und das zumindest eine Untersegment hinsichtlich seiner Transparenz steuerbar ist, und wobei jedes einzelne Segment (330) zwei oder mehr, vorzugsweise fünf, in derselben Ebene liegende, vorzugsweise einander angrenzende, Untersegmente (331 bis 335) umfasst, wobei die Untersegmente (331 bis 335) unabhängig voneinander steuerbar sind, **dadurch gekennzeichnet, dass** die Untersegmente (331 bis 335) unterschiedliche Form und/oder Größe aufweisen.

2. Lichtmodul nach Anspruch 1, wobei
die durchgehende Schicht als eine Flüssigkristallschicht (33), beispielsweise eine Flüssigkristallanzeige, ausgebildet ist.

3. Lichtmodul nach Anspruch 1 oder 2, wobei alle Segmente (330) in einer vertikalen Ebene liegen und einander angrenzen.

4. Lichtmodul nach einem der Ansprüche 1 bis 3, wobei
jedes Mikro-Abbildungssystem genau eine Mikro-Eintrittsoptik (310), genau eine Mikro-Austrittsoptik (320) und genau ein Segment (330) der durchgehenden, hinsichtlich ihrer Transparenz steuerbaren Schicht (33) aufweist.

5. Lichtmodul nach einem der Ansprüche 1 bis 4, wobei
jeder Lichtquelle (2) ein Kollimator (4) vorgelagert ist und jede Lichtquelle (2) zum Erzeugen einer vorbestimmten Lichtverteilung eingerichtet ist.

6. Lichtmodul nach einem der Ansprüche 1 bis 5, wobei
die Lichtquellen (2) auf einer, vorzugsweise quer zu einer Hauptabstrahlachse des Lichtmoduls (1) angeordneten Platine angeordnet sind, beispielsweise eine 4x3 matrixartige Anordnung bilden, und vorzugsweise Licht in unterschiedlichen Farben abstrahlen.

7. Lichtmodul nach einem der Ansprüche 1 bis 6, wobei
das Lichtmodul (1) dazu eingerichtet ist, mehrere Lichtverteilungen zu erzeugen, wobei der Typ jeder Lichtverteilung aus folgender Liste der Typen gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Fahrtrichtungsanzeiger-Lichtverteilung;
*) Positionslicht-Lichtverteilung;
*) Blendfreies Fernlicht-Lichtverteilung;
*) Lauflichteffekt-Lichtverteilung.

8. Lichtmodul nach einem der Ansprüche 1 bis 7, wobei
dem Lichtmodul (1) eine Steuervorrichtung (5) zugeordnet ist, welche Steuervorrichtung (5) dazu eingerichtet ist, die Transparenz der durchgehenden Schicht (33) zu steuern, wobei die Steuervorrichtung (33) vorzugsweise in dem Lichtmodul (1) angeordnet ist.

9. Kraftfahrzeugscheinwerfer mit zumindest einem Lichtmodul nach einem der Ansprüche 1 bis 8.

## Claims

1. Light module for a motor vehicle headlamp, which light module comprises:
^{∗}) at least one light source (2) and
^{∗}) at least one optical imaging system (3), which optical imaging system (3) images light generated by the at least one light source (2) into an area in front of the light module (1) in the form of at least one light distribution of a predetermined type, wherein the optical imaging system (3) comprises:
- ) an entrance optics (31)
- ) an exit optics (32), and
- ) at least one beam shaping device (33), wherein the beam shaping device (33) is arranged between the entrance optics (31) and the exit optics (32), wherein
^{∗}) the entrance optics (31) being set up to intercept the light generated by the at least one light source (2), and to guide it in the form of a plurality of light beams in the direction of the beam shaping device (33),
^{∗}) the beam shaping device (33) is adapted to shape the plurality of light beams into at least one intermediate image of a predetermined type, and
^{∗}) the exit optics (32) is arranged to project the at least one intermediate image of a predetermined type in the form of the at least one light distribution of a predetermined type into the one area in front of the light module (1), wherein
the beam shaping device (33) is formed as a continuous layer extending in a plane transverse to the optical axis (OA) of the optical imaging system (3), wherein the continuous layer is controllable with respect to its transparency and the total amount of light penetrating from the entrance optics (31) to the exit optics (32) can be influenced by adjusting the transparency of the continuous layer, wherein
the continuous layer comprises one, two or more segments (330) lying in the same plane, wherein
each individual segment is controllable independently of the other segments (330) with respect to its transparency, wherein
the entrance optics (31) is formed as a plurality of micro-entrance optics (310), the exit optics (32) is formed as a plurality of micro-exit optics (320), wherein
the micro-entry optics (310) and the micro-exit optics (320) are associated with each other in groups, and define a plurality of optical micro-imaging systems, each optical micro-imaging system comprising a group of micro-entry optics (310), a group of micro-exit optics (320) and at least one segment (330) of the continuous layer (33) controllable with respect to its transparency, wherein the light module (1) comprises a plurality of independently controllable light sources (2),
wherein at least a first part of the segments (330) is arranged to generate a light distribution of a first predetermined type, and at least a second part of the segments (330) is arranged to generate a light distribution of a second predetermined type, wherein each individual segment (330) comprises at least one subsegment (331 to 335) and the at least one subsegment is controllable with respect to its transparency, and
wherein each individual segment (330) comprises two or more, preferably five, sub-segments (331 to 335) lying in the same plane, preferably adjacent to each other, wherein the sub-segments (331 to 335) are controllable independently of each other,
**characterized in that**
the sub-segments (331 to 335) have different shapes and/or sizes.

2. Light module according to claim 1, wherein the continuous layer is formed as a liquid crystal layer (33), for example a liquid crystal display.

3. Light module according to claim 1 or 2, wherein all segments (330) lie in a vertical plane and are adjacent to each other.

4. Light module according to any of claims 1 to 3, wherein each micro-imaging system comprises exactly one micro-entry optic (310), exactly one micro-exit optic (320) and exactly one segment (330) of the continuous layer (33) controllable with respect to its transparency.

5. Light module according to any one of claims 1 to 4, wherein a collimator (4) is arranged upstream of each light source (2) and each light source (2) is arranged to generate a predetermined light distribution.

6. Light module according to any one of claims 1 to 5, wherein the light sources (2) are arranged on a circuit board, preferably arranged transversely to a main emission axis of the light module (1), for example forming a 4x3 matrix-like arrangement, and preferably emitting light in different colours.

7. Light module according to any one of claims 1 to 6, wherein the light module (1) is adapted to generate a plurality of light distributions, the type of each light distribution being selected from the following list of types:
^{∗}) turning light light distribution;
^{∗}) city light light distribution;
^{∗}) Country road light light distribution;
^{∗}) highway light distribution;
^{∗}) Auxiliary light light distribution for highway light;
^{∗}) bend lighting light distribution;
^{∗}) low beam light distribution;
^{∗}) low beam apron light distribution;
^{∗}) light distribution for asymmetrical low beam in the far field;
^{∗}) light distribution for asymmetrical low beam in the far field in bend lighting mode;
^{∗}) high beam light distribution;
^{∗}) direction indicator light distribution;
^{∗}) Position light distribution;
^{∗}) Glare-free high beam light distribution;
^{∗}) Running light effect light distribution.

8. Light module according to any one of claims 1 to 7, wherein a control device (5) is associated with the light module (1), which control device (5) is set up to control the transparency of the continuous layer (33), wherein the control device (33) is preferably arranged in the light module (1).

9. Motor vehicle headlamp having at least one light module according to any one of claims 1 to 8.

## Revendications

1. Module lumineux pour un phare de véhicule automobile, lequel module d'éclairage comprend :
^{∗}) au moins une source de lumière (2) ainsi que
^{∗}) au moins un système optique de reproduction (3), lequel système optique de reproduction (3) reproduit la lumière générée par la au moins une source de lumière (2) dans une zone située devant le module d'éclairage (1) sous la forme d'au moins une distribution de lumière d'un type prédéfini, le système optique de reproduction (3) présentant :
- ) une optique d'entrée (31)
- ) une optique de sortie (32), et
- ) au moins un dispositif de formation de faisceau (33), le dispositif de formation de faisceau (33) étant disposé entre l'optique d'entrée (31) et l'optique de sortie (32), dans lequel
^{∗}) l'optique d'entrée (31) est adaptée pour capter la lumière générée par la au moins une source de lumière (2), et la diriger sous la forme de plusieurs faisceaux lumineux en direction du dispositif de formation de faisceau (33),
^{∗}) le dispositif de formation de faisceau (33) est conçu pour former la pluralité de faisceaux lumineux en au moins une image intermédiaire d'un type prédéterminé, et
^{∗}) l'optique de sortie (32) est agencée pour projeter l'au moins une image intermédiaire d'un type prédéterminé sous la forme de l'au moins une distribution de lumière d'un type prédéterminé dans l'une des zones situées devant le module d'éclairage (1), dans lequel
le dispositif de formation de faisceau (33) est réalisé sous la forme d'une couche continue s'étendant dans un plan transversal à l'axe optique (OA) du système optique de formation d'image (3), la couche continue pouvant être commandée en ce qui concerne sa transparence et la quantité totale de lumière traversant de l'optique d'entrée (31) à l'optique de sortie (32) pouvant être influencée par le réglage de la transparence de la couche continue, où
la couche continue comprend un, deux ou plusieurs segments (330) situés dans le même plan, où
chaque segment individuel peut être commandé indépendamment des autres segments (330) en ce qui concerne sa transparence, où
l'optique d'entrée (31) est conçue comme une pluralité de micro-optiques d'entrée (310), l'optique de sortie (32) est conçue comme une pluralité de micro-optiques de sortie (320), où les micro-optiques d'entrée (310) et les micro-optiques de sortie (320) sont associées les unes aux autres par groupes, et définissent une pluralité de systèmes optiques de micro-imagerie, chaque système optique de micro-imagerie comprenant un groupe de micro-optiques d'entrée (310), un groupe de micro-optiques de sortie (320) et au moins un segment (330) de la couche continue (33) dont la transparence peut être commandée, dans lequel le module d'éclairage (1) comprend une pluralité de sources lumineuses (2) pouvant être commandées indépendamment les unes des autres,
où
au moins une première partie des segments (330) est agencée pour produire une distribution de lumière d'un premier type prédéterminé, et au moins une deuxième partie des segments (330) est agencée pour produire une distribution de lumière d'un deuxième type prédéterminé, chaque segment individuel (330) comprenant au moins un sous-segment (331 à 335), et ledit au moins un sous-segment pouvant être commandé quant à sa transparence, et dans lequel chaque segment individuel (330) comprend deux sous-segments (331 à 335) ou plus, de préférence cinq, situés dans le même plan, de préférence adjacents les uns aux autres, les sous-segments (331 à 335) pouvant être commandés indépendamment les uns des autres, **caractérisé en ce que** les sous-segments (331 à 335) ont une forme et/ou une taille différente.

2. Module lumineux selon la revendication 1, dans lequel la couche continue est conçue comme une couche de cristaux liquides (33), par exemple un affichage à cristaux liquides.

3. Module lumineux selon la revendication 1 ou 2, dans lequel tous les segments (330) sont situés dans un plan vertical et sont adjacents les uns aux autres.

4. Module lumineux selon l'une des revendications 1 à 3, dans lequel chaque microsystème d'imagerie présente exactement une micro-optique d'entrée (310), exactement une micro-optique de sortie (320) et exactement un segment (330) de la couche continue (33) dont la transparence peut être contrôlée.

5. Module lumineux selon l'une des revendications 1 à 4, dans lequel chaque source lumineuse (2) est précédée d'un collimateur (4) et chaque source lumineuse (2) est conçue pour générer une répartition lumineuse prédéterminée.

6. Module lumineux selon l'une des revendications 1 à 5, dans lequel les sources lumineuses (2) sont disposées sur une platine disposée de préférence transversalement à un axe principal d'émission du module lumineux (1), formant par exemple un agencement matriciel 4x3, et émettent de préférence de la lumière de différentes couleurs.

7. Module lumineux selon l'une quelconque des revendications 1 à 6, dans lequel le module d'éclairage (1) est adapté pour générer plusieurs distributions de lumière, le type de chaque distribution de lumière étant choisi dans la liste de types suivante :
^{∗}) distribution de lumière de virage ;
^{∗}) distribution d'éclairage urbain ;
^{∗}) distribution d'éclairage de route ;
^{∗}) répartition de l'éclairage sur autoroute ;
^{∗}) répartition lumineuse pour l'éclairage d'appoint pour l'éclairage autoroutier ;
^{∗}) répartition de l'éclairage en virage ;
^{∗}) répartition de l'éclairage des feux de croisement ;
^{∗}) répartition de l'éclairage des feux de croisement en amont ;
^{∗}) Distribution lumineuse pour feu de croisement asymétrique en champ lointain ;
^{∗}) répartition de la lumière pour un faisceau de croisement asymétrique en champ lointain en mode d'éclairage en virage ;
^{∗}) répartition de la lumière des feux de route ;
^{∗}) répartition de la lumière des feux indicateurs de direction ;
^{∗}) Distribution lumineuse des feux de position ;
^{∗}) répartition de la lumière des feux de route sans éblouissement ;
^{∗}) distribution de lumière à effet défilant.

8. Module lumineux selon l'une des revendications 1 à 7, dans lequel un dispositif de commande (5) est associé au module d'éclairage (1), lequel dispositif de commande (5) est agencé pour commander la transparence de la couche continue (33), le dispositif de commande (33) étant de préférence disposé dans le module d'éclairage (1).

9. Projecteur de véhicule automobile comportant au moins un module lumineux selon l'une quelconque des revendications 1 à 8.
